# NEUE EUROPÄISCHE PATENTSCHRIFT

(11) **EP 1 610 919 B2**
(45) Veröffentlichungstag und Bekanntmachung des Hinweises auf die Entscheidung über den Einspruch: **18.08.2021**
(45) Hinweis auf die Patenterteilung: 31.12.2014
(21) Anmeldenummer: 04725624.3
(22) Anmeldetag: 03.04.2004
(51) Int. Cl.: B23B 51/04, B23P 15/28

(54) **EINLIPPENBOHRER UND VERFAHREN ZU DESSEN HERSTELLUNG**
SINGLE-LIP DRILL AND METHOD FOR THE PRODUCTION THEREOF
FORET A UNE LEVRE ET SON PROCEDE DE PRODUCTION

(30) Priorität: 04.04.2003 DE 10316116
(43) Veröffentlichungstag der Anmeldung: 04.01.2006
(73) Patentinhaber: TBT Tiefbohrtechnik GmbH + Co, 72581 Dettingen (DE)
(72) Erfinder: RANDECKER, Hermann, 72581 Dettingen (DE); BAUMGÄRTNER, Heiner, 72574 Bad Urach (DE)
(74) Vertreter: Patentanwälte Ruff, Wilhelm, Beier, Dauster & Partner mbB
(86) Internationale Anmeldenummer: PCT/EP2004/003575
(87) Internationale Veröffentlichungsnummer: WO 2004/087356

(56) Entgegenhaltungen:
- WO-A1-00/10757
- DD-A5- 287 887
- DE-A- 3 629 034
- DE-A- 4 413 932
- DE-A- 10 210 839
- DE-A1- 2 522 565
- DE-A1- 3 314 718
- DE-C- 397 002
- DE-U- 7 231 045
- DE-U1- 7 905 118
- DE-U1- 8 332 287
- US-A- 3 199 381
- US-A- 3 422 706
- US-A1- 2002 172 569
- PATENT ABSTRACTS OF JAPAN Bd. 0122, Nr. 62 (M-721), 22. Juli 1988 (1988-07-22) -& JP 63 047004 A (TOSHIBA TUNGALOY CO LTD), 27. Februar 1988 (1988-02-27)
- PATENT ABSTRACTS OF JAPAN Bd. 0081, Nr. 77 (M-317), 15. August 1984 (1984-08-15) -& JP 59 069207 A (MITSUBISHI KINZOKU KK), 19. April 1984 (1984-04-19)
- Auszug aus dem Fachbuch 'Fachkunde Metall'
- Fotografien des Einlippenbohrers ID Nr. 9328081908
- Laufkarte zum Einlippenbohrer ID-Nr. 9328081908
- Oberflächenmessungen der Einlippenbohrer ID-Nr. 9328081908 & 9328081910
- Fotografien des Einlippenbohrers ID-Nr. 9328081910 & dazugehörige Laufkarte
- Schleifanweisung für einer Einlippenbohrer für Kupferbearbeitung
- Auszug aus einem Prospekt der Patentinhaberin aus dem Jahr 1976
- Auszug aus dem Fachbuch Handbook of Ceramic Hard Materials' aus dem Jahr 2000
- Eidesstattliche Versicherung von Herrn M. Vöhringer
- Eidesstattliche Versicherung von Herrn R. Haug
- Eidesstattliche Versicherung von Herrn C. Schnierer
- Eidesstattliche Versicherung von Herrn M. Dertz
- Vollständige Kopie der Veröffentlichung 'Tiefbohren'

## Beschreibung

### Anwendungsgebiet und Stand der Technik

Die Erfindung betrifft einen Einlippenbohrer und ein Verfahren zu dessen Herstellung. Der Einlippenbohrer besitzt einen Bohrkopf, der eine an dem Bohrkopf ausgebildete Schneide aufweist. Die Schneide besitzt eine Schneidkante zur spanabhebenden Bearbeitung eines Werkstücks. Der Schneidkante ist wenigstens ein Spanformer zur Spanformung durch die Schneidkante abgespanter Späne zugeordnet.

Einlippenbohrer sind gängige Bohrer, die beim Tiefbohren eingesetzt werden. Das Tiefbohren ist ein spanabhebendes Verfahren zur Herstellung oder Bearbeitung von Bohrungen. Tiefbohrungen sind üblicherweise Bohrungen mit einem Durchmesser zwischen ca. 1 mm bis 1500mm und einer Bohrtiefe ab ca. dem dreifachem Durchmessermaß. Das Einlippentiefbohren bzw. ELB-Tiefbohren ist eine spezielle Verfahrensvariante des Tiefbohrens, bei dem ein Einlippen- bzw. ELB-Tiefbohrwerkzeug eingesetzt wird. Einlippenbohrer lassen sich unterteilen in solche mit am Werkzeug angeschliffener Schneide und in solche mit auswechselbarer Schneide, beispielsweise in Form einer Schneidplatte bzw. Wendeschneidplatte. Das Einlippentiefbohren wird vorzugsweise im Durchmesserbereich von ca. 0,8mm bis 40mm durchgeführt. Die Zufuhr von Kühlschmierstoff erfolgt durch eine oder mehrere Bohrungen im Innern des Bohrers. Kühlschmierstoff ist ein Stoff, der beim Trennen und beim Umformen von Werkstoffen zum Kühlen und Schmieren eingesetzt wird. Die Ableitung des Kühlschmierstoff-Spänegemisches beim Einlippenbohrer geschieht durch eine Längsnut bzw. Sicke am äußeren Werkzeugschaft. Der Einsatz von großen Mengen Kühlschmierstoff ist ökologisch bedenklich, da das Kühlschmierstoff-Spänegemisch eine Altlast darstellt, die entsorgt oder wieder aufbereitet werden muss. Man setzt deshalb zunehmend Minimalmengenschmierungen ein, bei der die eingesetzte Schmierstoffmenge auf das unbedingt notwendige Maß reduziert wird. Ein Problem dabei ist es, trotz sehr geringer Kühlschmierstoffmenge für eine ausreichende Späneabfuhr zu sorgen, um damit eine gute Qualität des Tiefbohrprozesses sicherzustellen.

JP 63 - 47004 A offenbart einer Einlippenbohrer gemäß dem Oberbegriff des Anspruchs 1.

### Aufgabe und Lösung

Aufgabe der Erfindung ist es, einen Einlippenbohrer der eingangs genannten Art zu schaffen, der insbesondere auch bei Minimalmengenschmierung produktionssicher arbeitet und insbesondere eine hohe Verschleißfestigkeit aufweist.

Diese Aufgabe wird durch einen Einlippenbohrer mit den Merkmalen des Anspruchs 1 und durch ein Verfahren zu dessen Herstellung mit den Merkmalen des Anspruchs 11 gelöst. Weiterbildungen der Erfindung sind in den Unteransprüchen dargestellt. Der Wortlaut sämtlicher Ansprüche wird durch Bezugnahme zum Inhalt der Beschreibung gemacht.

Der erfindungsgemäße Einlippenbohrer zeichnet sich u.a. dadurch aus, dass er einen Spanformer mit positivem Spanwinkel besitzt.

Unter Einlippenbohrern im Sinne der Anmeldung werden solche verstanden, die einen Bohrkopf mit einer daran ausgebildeten Schneide aufweisen. Die Schneide ist einstückig mit dem Bohrkopf verbunden, nämlich in den Bohrkopf eingeschliffen.

Als Schneide bzw. Schneidkeil im Sinne der Anmeldung wird der an der Spanerzeugung beteiligte Bereich des Einlippenbohrers verstanden. Der Schneidkeil wird von der Spanfläche, die unmittelbar mit dem abgespanten Span in Berührung kommen kann, und der Freifläche begrenzt. Die Spanfläche ist die Fläche am Schneidkeil, auf der der Span aufläuft. Die Fläche am Schneidkeil, die der entstehenden Werkstückoberfläche bzw. Bearbeitungsfläche gegenüber liegt, nennt man Freifläche. Die Linie, an der die Spanfläche und die Freifläche einander berühren, wird als Schneidkante bezeichnet. Als Spanwinkel wird der Windel zwischen einer zur Bearbeitungsfläche des zu bearbeitenden Werkstücks senkrecht stehenden, gedachten Linie und der Spannfläche an der Schneidkante bezeichnet. Es können mehrere Schneidkanten vorhanden sein, beispielsweise eine Außenschneide und eine Innenschneide. Der Keilwinkel ist der Winkel zwischen der Spanfläche und der Freifläche und der Freiwinkel ist der Winkel zwischen der Bearbeitungsfläche und der Freifläche. Spanformer bzw. Spanbrecher dienen zum Spanformen bzw. Brechen der Späne und werden in den Fällen vorgesehen, bei denen der Spanbruch nicht sicher gestellt ist. Dies kann beispielsweise dann vorkommen, wenn das Verformungsvermögen des Werkstücks sehr hoch ist und ein sogenannter "Fließspan" entsteht, der ohne Bruchhilfe erst sehr spät bricht. Jeder Schneidkante kann wenigstens ein Spanformer zugeordnet sein, beispielsweise kann der Außenschneide ein Spanformer und der Innenschneide ein weiterer Spanformer zugeordnet sein.

Der positive Spanwinkel am Spanformer des erfindungsgemäßen Einlippenbohrers bewirkt, dass der abgespante Span nun nicht mehr, wie beispielsweise bei herkömmlichen Einlippenbohrern mit 0° Spanwinkel der Fall, rechtwinklig auf die Spanfläche aufläuft, sondern schräg, da die Spanfläche gegenüber der zur Bearbeitungsfläche senkrecht gedachten Linie geneigt ist. Der Span wird also beim Auftreffen auf die Spanfläche weniger stark gestaucht, was dazu führt, dass die durch den auftreffenden Span erzeugte Flächenbelastung der Spanfläche, die beispielsweise zu einer Wärmeentwicklung infolge der Reibung zwischen Span und Werkstück führen kann, relativ gering ist. Es wird sozusagen ein "weicher" Schnitt erzeugt. Dies führt dazu, dass erfindungsgemäße Einlippenbohrer produktionssicher bei Minimalmengenschmierungen beispielsweise mit Druckluft oder beim Einsatz von Kühlschmierstoffen mit geringen Viskositäten verwendet werden können.

Ein weiterer Vorteil des erfindungsgemäßen Einlippenbohrers ist, dass eine gezielte Spanformung des abgespanten Spans möglich ist, die an Minimalmengenschmierungsbedingungen anpaßbar ist. Für den sicheren Späneabtransport durch Kühlschmierstoff ist es zunächst einmal notwendig, dass Späne eine bestimmte Größe nicht überschreiten, da sie ansonsten durch den begrenzten Raum in der Sicke nicht sicher mitgenommen werden. Dies kann dazu führen, dass sich Späne im Bereich der Schneide ansammeln und den Bohrprozess beeinträchtigen können. Bei herkömmlichen Einlippenbohrer mit Spanwinkel 0° tritt das Problem eines langbrechenden Spans normalerweise nicht auf, da infolge der starken Spanstauchung auf der Spanfläche meist ein kurzbrechender Span entsteht. Jedoch werden extrem kurze Späne wiederum nicht sicher abtransportiert, wenn Kühlschmierstoffe mit geringen Viskositäten eingesetzt werden, da sie zu geringen Widerstand bieten. Durch den Spanbrecher mit positivem Spanwinkel entstehen Späne, die einerseits klein genug sind, um sicher "bewegt" zu werden und andererseits groß genug sind, um Kühlschmierstoffen mit geringen Viskositäten genügend Angriffsfläche zum Abtransport zu bieten.

Der Spanwinkel des Spanformers liegt beim Einlippenbohrer der beanspruchten Erfindung im Bereich von 10° bis 30°, insbesondere im Bereich von 15° bis 25°.

Der Spanformer weist Bereiche mit unterschiedlich großem positiven Tangentenwinkel auf, so dass der Span, der auf dem Spanformer entlang gleitet, in unterschiedlichen Bereichen unterschiedlich stark gestaucht bzw. verformt wird. Als Tangenten- bzw. Spanflächenwinkel wird der Winkel zwischen einer zur Bearbeitungsfläche des zu bearbeitenden Werkstücks senkrecht stehenden, gedachten Linie und einer Tangente an die Spanfläche, ausgenommen der Bereich direkt an der Schneidkante, bezeichnet. Der Winkel direkt an der Schneidkante wird als Spanwinkel bezeichnet. Der Spanwinkel an der Schneidekante ist positiv, so dass der Span dort relativ wenig gestaucht wird, womit die Flächenbelastung, die durch den auftreffenden Span an der Schneidkante verursacht wird, relativ gering ist. Der Span gelangt beim "Durchwandern" des Spanformers anschließend in Bereiche, bei denen der Tangentenwinkel gegenüber dem "Schneidkanten"-Bereich geringer ist, so dass er dort stärker gestaucht wird. Der Span kann Bereiche mit annähernd 0°-Tangentenwinkel oder sogar negativem Tangentenwinkel mit starker Spanstauchung durchlaufen. Irgendwann wird die Spanstauchung bzw. die Belastung auf den Span so groß, dass er bricht.

Bei der beanspruchten Erfindung besitzt der Spanformer eine Spanleitfläche zur Spanleitung der Späne und einen bogenförmig gekrümmten Spanbruchabschnitt zur Brechung der Späne. Die Spanleitfläche ist der Bereich, der im wesentlichen unmittelbar an die Schneidkante angrenzt und auf die der Span nach Spanabhebung zunächst auftrifft. Vorzugsweise besitzt die Spanleitfläche einen relativ großen positiven Spanwinkel und Bereiche mit einheitlichem zum Spanwinkel nahezu identischen Tangentenwinkel oder Bereiche mit unterschiedlich großen positiven Tangentenwinkeln. Der Spanbruchabschnitt schließt direkt an die Spanleitfläche an. Dort sind im Vergleich zur Spanleitfläche kleinere positive Tangentenwinkel, 0° Tangentenwinkel und negative Tangentenwinkel vorgesehen , die eine Brechung des Spans verursachen können.

Besonders bevorzugt ist es, wenn der Spanbruchabschnitt in einem Abstand von der Schneidkante angeordnet ist, der zur Einstellung einer gewünschten Spangröße geeignet ist. Damit ist eine gezielte Spangrößeneinstellung des abgespanten Spans möglich. Durch Variieren des Abstandes des Spanbruchabschnitts von der Schneidkante können Späne unterschiedlicher Größe und Form erzeugt werden, die optimal an die jeweiligen Kühlschmierstoffbedingungen, insbesondere an Minimalmengenschmierungsbedingungen, angepasst sind, d.h. sicher abtransportiert werden können.

Wann der Span im Spanbruchabschnitt bricht, hängt von verschiedenen Einflussfaktoren ab, die beim Festlegen des Abstandes mit berücksichtigt werden sollten. Solche Einflussfaktoren sind beispielsweise Werkstückstoffeigenschaften des zu bearbeitenden Werkstücks, insbesondere dessen Verformbarkeit, Bearbeitungsgeschwindigkeit des Bohrprozesses o.dgl.

Der Abstand kann beispielsweise im Bereich von 0,2mm bis 1,5mm, insbesondere im Bereich von 0,3mm bis 0,6mm liegen.

Gemäß der beanspruchten Erfindung ist der Spanformer bzw. Spanbrecher in Form einer an die Schneidkante angrenzende Nut bzw. Rinne ausgebildet. Der nutartige Spanformer istin zwei Bereiche eingeteilt. Ein erster, insbesondere bogenförmig gekrümmter Bereich erstreckt sich von der Schneidkante bis zu einem Nutgrund . Dieser Bereich wird als Spanleitfläche bezeichnet. Vorzugsweise nimmt der positive Tangentenwinkel, der durch Anlegen einer Tangente an die Krümmung ermittelt werden kann, in diesem zum Nutgrund hin insbesondere stetig ab, bis schließlich am Nutgrund annähernd ein 0°-Tangentenwinkel erreicht wird. Ein zweiter bogenförmig gekrümmter Bereich erstreckt sich vom Nutgrund bis zu einer Begrenzungsfläche der zum Abtransport des Kühlschmierstoff-Späne-Gemischs ausgebildeten Sicke. Dieser Bereich wird als Spanbruchabschnitt bezeichnet, wobei ausgehend von einem im wesentlichen 0°-Tangentenwinkel am Nutgrund dieser zur Begrenzungsfläche hin immer negativer wird.

Alternativ ist es möglich die Spanleitfläche des Spanformers nicht gekrümmt auszubilden, sondern als Schrägfläche mit einheitlich positivem Span- bzw. Tangentenwinkel. An diese schräge Spanleitfläche schließt sich dann ein gekrümmter bzw. mit Radius versehener Spanbruchabschnitt an.

Bei der beanspruchten Erfindung ist an mindestens einer Funktionsfläche des Einlippenbohrers eine Funktionsbeschichtung vorgesehen. Als Funktionsflächen im Sinne der Anmeldungen werden insbesondere solche Flächen bezeichnet, die eine bestimmte Aufgabe beim Tiefbohrprozess erfüllen, beispielsweise das Abspanen von Spänen, das Abstützen des Bohrers in der Bohrung, der Abtransport von Spänen usw.. Es handelt sich bei der Funktionsfläche u.a. um den zur Spanformung der Späne dienenden Spanformer. Zumindest der Spanformer, also dessen Spanleitfläche und Spanbruchabschnitt ist also mit der Funktionsbeschichtung versehen.

Gemäß der beanspruchten Erfindung ist die Funktionsbeschichtung an allen am Schnittprozess beteiligten Funktionsflächen vorgesehen. Die Funktionsbeschichtung ist an allen direkt mit dem Werkstück in Berührung kommenden Funktionsflächen vorgesehen 1. Dies sind beispielsweise die Führungsleisten und die Rundschlifffase, die zur Abstützung des Einlippenbohrers in der Bohrung dienen. Zu diesen Funktionsflächen gehört auch der Bereich der Schneidkante, der sowohl direkt mit dem Werkstück als auch mit dem abgespanten Span in Berührung kommt. Zusätzlich sind auch die Freifläche und die Begrenzungsflächen der späneabführenden Sicke mit der Funktionsbeschichtung versehen.

Eine Aufgabe der Funktionsbeschichtung ist es, die Verschleißfestigkeit des Bohrers insbesondere bei hohen Schnittgeschwindigkeiten zu erhöhen. Durch die Funktionsbeschichtung wird der Abrieb des Einlippenbohrers bei Kontakt mit dem zu bearbeitenden Werkstück, insbesondere im Bereich der Schneidkante vermindert. Ferner wird eine Auskolkung verhindert, die dann stattfinden kann, wenn Späne auf dem Spanformer gleiten und dabei Material aus dem Gefüge des Spanformers herausbrechen. Ein weiterer Vorteil der Funktionsbeschichtung ist, dass die Haftung zwischen dem Einlippenbohrer und dem zu bearbeitenden Werkstück vermindert wird. Dadurch wird verhindert, dass insbesondere bei hohen Pressungen zwischen Einlippenbohrer und Werkstück ein als "Aufbauschneide" bezeichnetes Verschweißen von Werkstückstoff und Schneide entsteht.

Die Funktionsbeschichtung kann mindestens teilweise aus Hartstoff, insbesondere aus metallischem Hartstoff bestehen. Als metallischer Hartstoff wird vorzugsweise ein Nitrid oder ein Karbid verwendet. Es kann jedoch auch ein Borid oder Silicid eingesetzt werden. Besonders bevorzugt ist es, ein Leichtmetallnitrid, insbesondere Titanaluminiumnitrid, zu verwenden.

Alternativ ist es möglich, nichtmetallische Hartstoffe einzusetzen, beispielsweise Diamant, Borkarbid oder Bornitrid.

Die Funktionsbeschichtung kann mehrere, insbesondere übereinanderliegende, Schichten aufweisen. Es kann mindestens eine Hartstoffschicht und mindestens eine an die Hartstoffschicht angrenzende Weichstoffschicht vorgesehen sein, wobei die Hartstoffschicht eine äußere Schicht bzw. eine Oberfläche bildet.

Die Erfindung umfasst ferner ein Verfahren zur Herstellung des Einlippenbohrers des Anspruchs 1 mit den Merkmalen des unabhängigen Anspruchs 11.

Das erfindungsgemäße Verfahren zeichnet sich dadurch aus, dass zunächst ein Bohrkopf mit einer typischen Bohrergeometrie des Einlippenbohrers hergestellt wird. Das Herstellen umfasst insbesondere das Herstellen des Bohrkopfes aus einem Rohmaterial, beispielsweise durch einen Sinterprozess, das Ausbilden eines Kühlschmierstoffkanals zur Zuführung von Kühlschmierstoff, das Ausbilden einer Sicke zum Zwecke der Abfuhr von Kühlschmierstoff-Spänegemisch, das Ausbilden, insbesondere Einschleifen der Schneide usw..

Ein weiterer Verfahrensschritt des erfindungsgemäßen Verfahrens ist das Ausbilden eines Spanformers bzw. Spanbrechers im Bereich der Schneide des Einlippenbohrers. Schließlich werden Funktionsflächen des Einlippenbohrers mit einer Funktionsbeschichtung versehen. Es wird also zunächst die Formgebung des Bohrkopfes abgeschlossen und danach eine Funktionsbeschichtung aufgebracht, was zur Folge hat, dass zumindest auch der Spanformer und alle anderen am Schnittprozess beteiligten Funktionsflächen mit der Funktionsbeschichtung versehen sind. Dies unterscheidet das erfindungsgemäße Verfahren wesentlich von herkömmlichen Verfahren, bei denen als letzter Verfahrensschritt der Spanformer eingeschliffen wird, so dass eine etwaige Beschichtung auf dem Spanformer wieder abgeschliffen wird und der Spanformer dann keine Beschichtung mehr aufweist.

Bezüglich weiterer Details des Verfahrens wird auf die vorstehende Beschreibung und die nachfolgende Figurenbeschreibung verwiesen.

### Kurzbeschreibung der Zeichnungen

Ausführungsbeispiele der Erfindung sind in den Zeichnungen dargestellt und werden im folgenden näher erläutert. In den Zeichnungen zeigen:
- Fig. 1: eine perspektivische Ansicht eines Ausführungsbeispiels eines Bohrkopfes des erfindungsgemäße Einlippenbohrers,
- Fig. 2: eine Vorderansicht des Einlippenbohrers von Fig. 1,
- Fig. 3: eine Seitenansicht des Einlippenbohrers von Fig. 1,
- Fig. 4: eine vergrößerte Darstellung der Einzelheit X von Fig. 3 bei der die Spanabhebung eines Spans und die Schneidengeometrie näher darstellt und
- Fig. 5: eine nochmalige Vergrößerung der Einzelheit X, bei der verschiedene Bereiche des Spanformers und eine mehrschichtige Funktionsbeschichtung gezeigt sind.

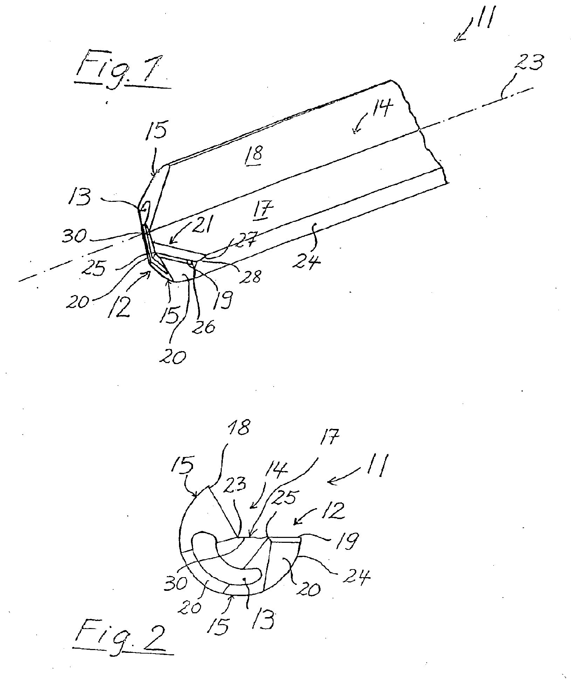

Die Fig. 1 zeigt ein Ausführungsbeispiel des erfindungsgemäßen Einlippenbohrers, wobei lediglich der Bohrkopf 11 dargestellt ist. Einlippenbohrer bestehen im wesentlichen aus einem Bohrschaft und einem mit dem Bohrschaft insbesondere stoffschlüssig verbundenen Bohrkopf 11 oder einem Vollhartmetaliwerkzeug. Ein Verbinden des Bohrschaftes mit dem Bohrkopf 11 erfolgt vorzugsweise mittels eines Lötverfahrens, beispielsweise mittels Hartlöten. Der Bohrschaft wird mit einer Spannhülse verbunden, die ihrerseits in einer Werkzeugaufnahme einer Einlippen-Tiefbohrmaschine befestigt wird. Der Bohrschaft oder das Vollhartmetallwerkzeug kann fest, insbesondere stoffschlüssig mit der Spannhülse verbunden sein, beispielsweise mittels einer Löt- oder Klebeverbindung.

Der Einlippenbohrer samt Spannhülse wird auch als Einlippen- bzw. ELB-Tiefbohrwerkzeug bezeichnet.

Der Bohrkopf 11 besitzt eine im Bereich seiner Stirnseite ausgebildete Schneide 12, einen im Inneren des Bohrkopfs 11 befindlichen Kühlschmierstoffzuführkanal 13, eine Sicke 14 bzw. Nut zur Abfuhr des Kühlschmierstoff-Spänegemisches sowie Führungsleisten 15 am Umfang, die beim Bohrvorgang direkt mit dem zu bearbeitenden Werkstück 16 in Kontakt stehen und den Einlippentiefbohrer in der Bohrung führen.

Der Bohrkopf besteht aus Hartstoff bzw. Hartmaterial, der bzw. das eine spanabhebende Bearbeitung des Werkstücks 16 ermöglicht. Als Hartstoff wird vorzugsweise Hartmetall verwendet.

Die Kühlschmierstoffzufuhr erfolgt beim Einlippenbohrer typischerweise durch den im Inneren des Bohrers liegenden Kühlschmierstoffzuführkanal 13, der sich vom Bohrschaft bis zum Bohrkopf 11 längs einer Bohrerachse 23 erstreckt und an der Stirnseite des Bohrkopfes 11 in einem Kühlschmierstoff-Auslass endet. Der Kühlschmierstoff hat beim Tiefbohren mehrere Aufgaben. Er sorgt für eine Schmierung der Schneide 12 und der Führungsleisten 15 und damit für eine Reduzierung von Reibung und Verschleiß des Einlippenbohrers. Eine andere Aufgabe ist die Kühlung, d.h. die Ableitung der Wärme von Werkzeug und Werkstück 16. Schließlich sorgt der Kühlschmierstoff für eine kontinuierliche Späneabfuhr der abgespanten Späne 22. Kühlschmierstoffe zum Tiefbohren sind in der Regel nicht wassermischbare Kühlschmierstoffe, insbesondere Tiefbohröle. Gegebenenfalls können Zusätze bzw. Additive zur Verbesserung der Gebrauchseigenschaften, beilspielsweise zur Verschleißminderung, vorgesehen werden.

Ebenfalls typisch für Einlippenbohrer ist die außenliegende Sicke 14 bzw. Nut zur Abfuhr des Kühlschmierstoff-Spänegemisches. Der Einlippenbohrer hat damit in Vorderansicht (Fig. 2) das Aussehen einer "Torte", von der ein Tortenstück herausgenommen wurde, wobei die dabei entstehende Lücke die Sicke 14 darstellt. Die Sicke 14 besitzt zwei insbesondere stumpfwinklig zueinander angeordnete Begrenzungsflächen 17, 18, von denen eine Begrenzungsfläche 17 direkt an die Schneide 12 angrenzt. Die Sicke 14 erstreckt sich längs der Bohrerachse 23 bis in den Bereich des Bohrschaftes, wo sie endet. Beim Bohrvorgang ist im Bereich des Bohrschaftes ein Spänekasten angeordnet, der das abgeführte Kühlschmierstoff-Spänegemisch auffängt.

Die Schneide 12 befindet sich im vorderen, stirnseitigen Bereich des Bohrkopfes 11. Sie ist der Teil des Bohrkopfes 11, an dem Schneidkante 19 (Außenschneidkante), Spanfläche, Freifläche 20, Spanformer 21 und Innenschneidkante 30 liegen.

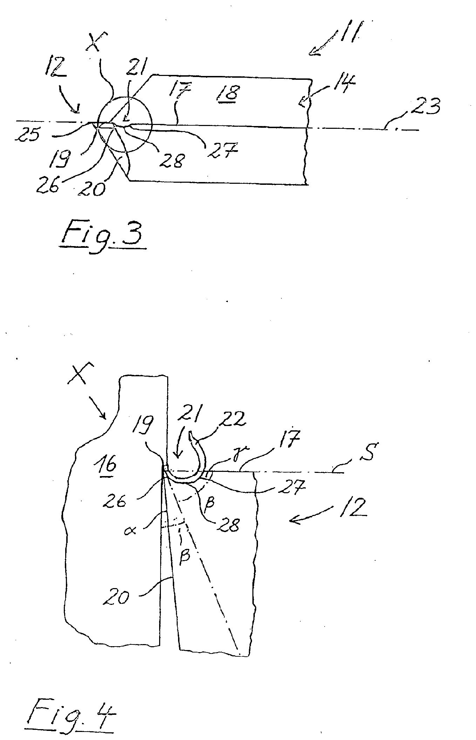

Eine typische Schneiden bzw. Schneidkeilgeometrie für Einlippenbohrer ist in Fig. 4 dargestellt. Der Schneidkeil wird durch die Freifläche 20 und die Spanfläche begrenzt, wobei die Spanfläche in der gezeigten Ausführungsform durch den Spanformer 21 repräsentiert ist. Der Spanwinkel γ ist der Winkel zwischen der Spanfläche und einer zur Bearbeitungsfläche des zu bearbeitenden Werkstücks 16 senkrecht gedachten Linie S direkt an der Schneidkante 19 bzw. Innenschneidkante 30. Außerhalb des "Schneidkanten-Bereichs" wird der Winkel als Tangentenwinkel γ^{*} bezeichnet.

Als Freiwinkel α bezeichnet man den freien Winkel zwischen Freifläche und bearbeiteter Fläche. Wäre er 0°, so würde die Freifläche auf der Werkstückoberfläche stark reiben. Große Freiwinkel mindern den Freiflächenverschleiß, begünstigen aber das Ausbrechen der Schneidkante.

Man wählt den Freiwinkel deshalb gerade so groß, dass das Werkzeug genügend frei schneidet.

Der Keilwinkel β ist der Winkel des in das Werkstück eindringenden Schneidkeils. Seine Größe wird von dem zu verspanenden Werkstoff bestimmt und ergibt zusammen mit Freiwinkel und Spanwinkel immer einen Winkel von 90°. Beim Spannwinkel 0° fallen also die zur Bearbeitungsfläche senkrecht gedachte Linie S und die Spanfläche zusammen. Ist die Summe aus Freiwinkel und Keilwinkel kleiner als 90°, so spricht man von der Differenz zu 90° von einem positiven Spanwinkel. Demgemäß ergibt sich, wenn die Summe aus Freiwinkel und Keilwinkel größer als 90° ist, ein negativer Spanwinkel.

Die Schneidkante 19 bzw. Innenschneidkante 30 ist die Linie, an der Span- und Freifläche 20 einander berühren. Sie kommt direkt mit dem zu bearbeitenden Werkstück 16 in Kontakt und ist für ein Abspanen von Spänen 22 verantwortlich.

Wie in Fig. 1 dargestellt, verläuft die Schneidkante 19 im Winkel zu einer Bohrerachse 23 und erstreckt sich von einer Außenfläche 24 des Einlippenbohrers bis zu dessen Bohrerspitze 25. Im beschriebenen Ausführungsbeispiel ist lediglich der Schneidkante 19 (Aussenschneidkante) ein Spanformer 21 zugeordnet. Der Spanformer 21 grenzt im wesentlichen unmittelbar an die Schneidkante 19 an und verläuft parallel dazu ebenfalls zwischen der Außenfläche 24 und der Bohrerspitze 25. Der Spanformer 21 hat die Form einer Nut mit U-förmigem Querschnitt (Fig. 3, 4 und 5). Er lässt sich in zwei Bereiche einteilen, nämlich in eine im wesentlichen unmittelbar an die Schneidkante 19 angrenzende Spanleitfläche 26, die zur Spanleitung der Späne 22 dient und in einen im Abstand von der Schneidekante 19 angeordneten Spanbruchabschnitt 27, der zur Brechung der Späne 22 dient.

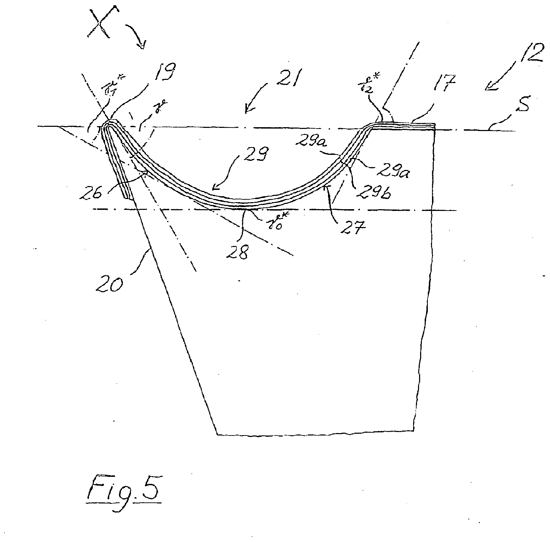

Wie in Fig. 4 und insbesondere in Fig. 5 dargestellt, erstreckt sich die Spanleitfläche 26 von der Schneidekante 19 bis zu einem Nutgrund 28 der Nut. Der Spanbruchabschnitt 27 schließt direkt an die Spanleitfläche 26 an und erstreckt sich vom Nutgrund 28 bis zur Begrenzungsfläche 17 der Sicke 14. Spanleitfläche 26 und Spanbruchabschnitt 27 zeichnen sich dadurch aus, dass die Spanstauchung für den auftreffenden Span 22 stetig größer wird, bis er schließlich im Spanbruchabschnitt 27 bricht.

Die größer werdende Spanstauchung wird durch die gekrümmt ausgebildete Spanleitfläche 26 sowie den ebenfalls gekrümmt ausgebildeten Spanbruchabschnitt 27 erzielt, wobei ausgehend von einem relativ großen Spanwinkel γ, der Tangentenwinkel sich stetig ändert. Dies ist beispielhaft durch vier verschiedene Span- bzw. Tangentenwinkel γ, γ^{*}₀, γ^{*}₁ und an vier verschiedenen Bereichen des Spanformers 21 dargestellt. Der Span- bzw. Tangentenwinkel γ bzw. γ^{*} ist durch Anlegen einer Tangente an die Spanformer-Krümmung in den jeweiligen Bereichen bestimmbar. An der Schneidkante 19 ist die Spanstauchung am geringsten, was durch einen großen, positiven Spanwinkel γ repräsentiert wird. Die Neigung zwischen der zur Bearbeitungsfläche des Werkstücks 16 senkrecht gedachten Linie S und der Spanleitfläche 26 in diesem Bereich ist also am größten. Eine geringe Spanstauchung reduziert die Flächenbelastung der Spanleitfläche 26 in diesem Bereich, beispielsweise wird die Reibung zwischen Span 22 und Spanleitfläche 26 verringert. Die Spanstauchung des Spans 22 wird zum Nutgrund 28 hin immer größer, was beispielhaft durch den Spanwinkel γ^{*}₁ gezeigt ist, der kleiner, also weniger positiv als der Spanwinkel γ ist.

Am Nutgrund 28 ist der Spanwinkel γ^{*}₀ 0° groß. Dort beginnt der Spanbruchabschnitt 27, der sich durch eine große Spanstauchung repräsentiert durch negative Tangentenwinkel γ^{*}, auszeichnet. Auch im Spanbruchabschnitt 27 nimmt die Spanstauchung stetig zu und ist am Übergang zur Begrenzungsfläche 17 der Sicke 14 am größten. Dies ist beispielhaft durch den großen negativen Spanwinkel γ^{*}₂ gezeigt. Der genaue Bruchpunkt des Spans 22 ist von mehreren Faktoren abhängig, beispielsweise von der Verformbarkeit des Werkstückmaterials, von der Bearbeitungsgeschwindigkeit des Bohrers, von der Steilheit des Spanbruchabschnitts 27, vom Eigengewicht des Spans 22 usw.. Einen zusätzlichen Einfluss auf die Spangröße hat der Abstand des Spanbruchabschnitts 27 von der Schneidkante 19. Durch Variieren dieses Abstandes kann eine gewünschte Spangröße eingestellt werden. Der Abstand liegt vorzugsweise im Bereich von 0,3mm bis 0,6mm.

In Fig. 5 ist ferner eine Funktionsbeschichtung 29 des Einlippenbohrers beispielhaft anhand der Beschichtung des Spanformers 21 gezeigt. Die Funktionsbeschichtung 29 hat vor allem die Aufgabe den Verschleiß an den am Schnittprozeß beteiligten Funktionsflächen zu vermindern. Solche Funktionsflächen sind beispielsweise die Schneide 12 mit Schneidekante 19, Spanformer 21, Freifläche 20, die zur Abstützung in der Bohrung eingesetzten Führungsleisten 15 und die Begrenzungsflächen 17, 18 der späneabführenden Sicke 14. Vor allem die Beschichtung der Schneidekante 19 und des Spanformers 21 ist wichtig, da dort ein starker Verschleiß auftritt. Die Funktionsbeschichtung wirkt reibungsvermindert, so dass die Reibung zwischen auftreffenden Span 22 und Spanformer 21, insbesondere dessen Spanleitfläche 26 verringert wird, was zu einer verringerten Wärmeentwicklung in diesem Bereich führt. Außerdem schützt die Funktionsbeschichtung 29 die Oberfläche der Spanleitfläche 26 und des Spanbruchabschnitts 27, so dass Auskolkungen bzw. ein Kolkverschleiß, bei dem durch den auftreffenden Span 22 Material aus der Oberfläche herausbricht, verhindert werden. Zudem wirkt die Funktionsbeschichtung 29 haftungsvermindernd, so dass im Bereich der Schneidkante 19 sogenannte "Aufbauschneiden", eine Materialverschweißung zwischen Span 22 und Schneidkante 19, vermieden werden.

Als Beschichtungsmaterial der Funktionsbeschichtung 29 wird metallischer Hartstoff, insbesondere Titan-Aluminium-Nitrid verwendet. Wie in Fig. 5 dargestellt, kann die Funktionsbeschichtung 29 ihrerseits mehrere Schichten aufweisen, also eine Art "Multi-Layer-Beschichtung" bilden. Dies ist beispielhaft anhand einer Funktionsbeschichtung 29 aus drei Schichten dargestellt. Als unterste, direkt mit dem Spanformer 21 in Kontakt stehende Schicht, ist eine Hartstoffschicht 29a vorgesehen. Darüber befindet sich eine Weichstoffschicht 29b, die von einer weiteren Hartstoffschicht 29a überdeckt wird, die ihrerseits die äußere, eine Oberfläche bildende Schicht darstellt.

### Verfahren zur Herstellung eines Einlippenbohrers und Bohrvorgang

Zur Herstellung des Einlippenbohrers wird zunächst der Bohrschaft durch Ablängen eines Rohmaterials auf entsprechende Länge hergestellt. Als Rohmaterial kann ein Rohr, insbesondere aus Stahl, verwendet werden, so dass das Rohrinnere einen Teil des Kühlschmierstoffzuführkanals 13 bildet. Danach wird die Sicke 14 zur Abfuhr des Kühlschmierstoff-Spänegemisches angebracht, beispielsweise in den Bohrschaft eingewalzt.

Der Bohrkopf 11 ist aus Hartmetall und wird mittels eines Sinterprozesses hergestellt, wobei der bohrkopfseitige Teil des Kühlschmierstoffzuführkanals 13 und die Sicke 14 bereits vorgesehen sind.

Der gesinterte Bohrkopf 11 und der Bohrschaft werden mittels Hartlöten stoffschlüssig miteinander verbunden.

Alternativ ist es möglich dass Bohrkopf 11 und Bohrschaft aus einem Stück aus gesintertem Hartmetall hergestellt werden.

Als nächstes wird die Schneide 12 samt Schneidkante 19 und Spanformer 21 in den Bohrkopf 11 eingeschliffen. Als abschließender Verfahrensschritt wird der Spanformer 21 mit der Funktionsbeschichtung 29 versehen. Dies bietet im Vergleich zu herkömmlichen Herstellungsverfahren, bei denen als letzter Verfahrensschritt der Spanformer 21 eingeschliffen wird, den Vorteil, dass eine Beschichtung des Spanformers 21 mit der Funktionsbeschichtung 29 sichergestellt ist.

Einlippenbohrwerkzeuge müssen beim Anbohren in einer Anbohrbuchse geführt werden, weil sich die Bohrkräfte nicht, wie z.B. beim Wendelbohrer mit zwei Schneiden, gegenseitig aufheben. Daher muss das Werkzeug während des Bohrvorgangs abgestützt bzw. geführt werden.

Beim Einlippenbohrvorgang wird daher zunächst der Einlippenbohrer in der Bohrbuchse, die sich in einem Bohrbuchsenträger befindet, geführt. Nach Eintritt des Werkzeugs in die Bohrung übernimmt die Bohrung selbst diese Führungsaufgabe. Alternativ kann auch eine Führungsbohrung die Aufgabe einer Bohrbuchse übernehmen.

Der Bohrkopf 11 dringt also mit seiner Schneide 12 in das zu bearbeitende Werkstück 16 ein. Dabei kommt die Schneidkante 19 direkt mit dem Werkstück 16 in Kontakt, wodurch Späne 22 abgespant werden. Ein abgespanter Span 22 trifft dabei zunächst auf die Spanleitfläche 26 des Spanformers 21 im Bereich der Schneidkante 19. Der positive Spanwinkel γ bewirkt, dass im Bereich der Spanleitfläche 26 noch keine starke Stauchung des Spans 22 stattfindet, wodurch gewährleistet ist, dass der Span 22 nicht bricht, sondern geformt wird. Durch die sich ändernde Krümmung der Spanleitfläche 26 wird die Stauchung bzw. der Druck auf den Span 22 ständig erhöht. Der Span gleitet die Spanleitfläche 26 entlang und gelangt zum Spanbruchabschnitt 27, wo er infolge des negativen Tangentenwinkels γ^{*} stark gestaucht wird, und schließlich bricht. Durch die Variation des Abstandes zwischen der Schneidkante 19 und dem Spanbruchabschnitt 27 kann die Spangröße des Spans gezielt eingestellt werden, um sie an die jeweiligen Kühlschmierstoffbedingungen, beispielsweise eine Minimalmengenschmierung, anzupassen. Es ist auch möglich, die Krümmungen bzw. Steigungen der Spanleitfläche 26 und/oder des Spanbruchabschnittes 27 zu variieren, um damit eine bestimmte Spanform bzw. eine bestimmte Spangröße zu erzeugen.

## Patentansprüche

1. Einlippenbohrer mit einem Bohrkopf (11), der einen im Inneren des Bohrkopfs befindlichen Kühlschmierstoffzuführkanal (13), eine außenliegende Sicke (14) zur Abfuhr des Kühlschmierstoff-Spänegemischs sowie eine an dem Bohrkopf (11) ausgebildete Schneide (12) aufweist, wobei die Schneide (12) in den Bohrkopf eingeschliffen ist und wenigstens eine Schneidkante (19) zur spanabhebenden Bearbeitung eines Werkstücks besitzt und der Schneidkante (19) wenigstens ein Spanformer (21) zur Spanformung durch die Schneidkante (19) abgespanter Späne zugeordnet ist, wobei sich die Schneide (12) im vorderen, stirnseitigen Bereich des Bohrkopfs befindet, wobei die Schneidkante (19) der Schneide (12) im Winkel zur Bohrerachse (23) verläuft **dadurch gekennzeichnet, dass** der dieser Schneide (12) zugeordnete Spanformer (21) an der Schneidkante (19) einen positiven Spanwinkel (γ) im Bereich von 10° bis 30° aufweist, wobei der Spanformer (21) als eine an die Schneidkante (19) angrenzende Nut ausgebildet ist, die eine an die Schneidkante (19) angrenzende Spanleitfläche (26) zur Spanleitung der Späne (22) und einen bogenförmig gekrümmten Spanbruchabschnitt (27) zur Brechung der Späne (22) aufweist, wobei sich der Spanbruchabschnitt (27) direkt an die Spanleitfläche (26) anschließt und bis zu einer Begrenzungsfläche (17) der Sicke (14) erstreckt, wobei der Spanformer und alle anderen am Schnittprozess beteiligten Funktionsflächen mit einer Funktionsbeschichtung zur Erhöhung der Verschleißfestigkeit versehen ist.

2. Einlippenbohrer nach Anspruch 1, **dadurch gekennzeichnet, dass** der Spanwinkel (γ) im Bereich von 15° bis 25° liegt.

3. Einlippenbohrer nach Anspruch 1 oder 2, **dadurch gekennzeichnet, dass** der Spanbruchabschnitt (27) in einem zur Einstellung einer gewünschten Spangröße geeigneten Abstand von der Schneidkante (19) angeordnet ist.

4. Einlippenbohrer nach Anspruch 3, **dadurch gekennzeichnet, dass** der Abstand im Bereich von 0,2mm bis 1,5mm, insbesondere im Bereich von 0,3mm bis 0,6mm liegt.

5. Einlippenbohrer nach einem der vorhergehenden Ansprüche, **dadurch gekennzeichnet, dass** der Spanformer (21) als eine an die Schneidkante (19) angrenzende Nut mit einem im wesentlichen U-förmigen Querschnitt, ausgebildet ist.

6. Einlippenbohrer nach einem der vorhergehenden Ansprüche, **dadurch gekennzeichnet, dass** die Funktionsbeschichtung (29) wenigstens teilweise aus Hartstoff, insbesondere aus metallischem Hartstoff besteht.

7. Einlippenbohrer nach Anspruch 6, **dadurch gekennzeichnet, dass** als metallischer Hartstoff ein Nitrid oder ein Carbid, insbesondere ein Leichtmetallnitrid, vorgesehen ist.

8. Einlippenbohrer nach Anspruch 7, **dadurch gekennzeichnet, dass** als Leichtmetallnitrid Titanaluminiumnitrid vorgesehen ist.

9. Einlippenbohrer nach einem der vorhergehenden Ansprüche, **dadurch gekennzeichnet, dass** die Funktionsbeschichtung (29) mehrere Schichten (29a, 29b) aufweist.

10. Einlippenbohrer nach Anspruch 9, **dadurch gekennzeichnet, dass** mindestens eine Hartstoffschicht (29a) und mindestens eine an die Hartstoffschicht angrenzende Weichstoffschicht (29b) vorgesehen ist, wobei die Hartstoffschicht (29a) eine äußere Schicht bildet.

11. Verfahren zur Herstellung eines Einlippenbohrers nach einem der vorhergehenden Ansprüche, **gekennzeichnet durch** die folgenden Schritte:
- Herstellen eines Bohrkopfes (11) mit einer Bohrergeometrie des Einlippenbohrers, wobei der Bohrkopf (11) einen im Inneren des Bohrkopfs befindlichen Kühlschmierstoffzuführkanal (13), eine außenliegende Sicke (14) zur Abfuhr des Kühlschmierstoff-Spänegemischs sowie eine an dem Bohrkopf (11) ausgebildete Schneide (12) aufweist, die in den Bohrkopf eingeschliffen ist und wenigstens eine Schneidkante (19) zur spanabhebenden Bearbeitung eines Werkstücks aufweist, wobei sich die Schneide (12) im vorderen, stirnseitigen Bereich des Bohrkopfs befindet und die Schneidkante (19) der Schneide (12) im Winkel zur Bohrerachse (23) verläuft;
- Anbringen eines Spanformers (21) im Bereich der Schneide (12) des Einlippenbohrers, wobei der Spanformer (21) der Schneidkante (19) zugeordnet ist und an der Schneidkante (19) einen positiven Spanwinkel (γ) im Bereich von 10° bis 30° aufweist, wobei der Spanformer (21) als eine an die Schneidkante (19) angrenzende Nut ausgebildet wird, die eine an die Schneidkante (19) angrenzende Spanleitfläche (26) zur Spanleitung der Späne (22) und einen bogenförmig gekrümmten Spanbruchabschnitt (27) zur Brechung der Späne (22) aufweist, wobei sich der Spanbruchabschnitt (27) direkt an die Spanleitfläche (26) anschließt und bis zu einer Begrenzungsfläche (17) der Sicke (14) erstreckt, Beschichten des Bohrkopfes (11) nach Anbringen des Spanformers an mindestens einem Teil seiner Oberfläche mit einer Funktionsbeschichtung, wobei der Spanformer und alle anderen am Schnittprozess beteiligten Funktionsflächen mit der Funktionsbeschichtung beschichtet werden.

12. Verfahren nach Anspruch 11, **dadurch gekennzeichnet, dass** die Funktionsbeschichtung nach einem Nachschärfen, insbesondere Nachschleifen, des Bohrkopfes aufgebracht wird.

13. Verfahren nach einem der Ansprüche 11 bis 12, **dadurch gekennzeichnet, dass** der Spanformer als eine an die Schneidkante (19) der Schneide (12) angrenzende Nut mit U-förmigem Querschnitt, ausgebildet wird.

## Claims

1. Single-lip drill with a drill head (11), which has a cooling lubricant supply channel (13) located in the interior of the drill head, an exterior corrugation (14) for removing the cooling lubricant-chip mixture and a bit (12) formed on the drill head (11), the bit (12) being grinded in the drill head and having at least one cutting edge (19) for the machining by cutting of a workpiece and the cutting edge (19) being associated with at least one chip former (21) for shaping chips cut off by the cutting edge (19), wherein the bit (12) is located in the front, end-side region of the drill head, wherein the cutting edge (19) of the bit (12) extends at an angle to the drill axis (23), **characterized in that** the chip former (21) assigned to this bit (12) has a positive rake angle (γ) on the cutting edge (19) in the range between 10° and 30°, wherein the chip former (21) is constructed as a slot adjacent to the cutting edge (19), which has a chip guide face (26) adjacent to the cutting edge (19) for chip-guiding the chips (22) and an arcuately curved chip break section (27) for breaking the chips (22), wherein the chip break section (27) directly adjoins the chip guide face (26) and extends up to a boundary surface (17) of the corrugation (14), wherein the chip former and all the other functional surfaces participating in the cutting process are provided with a functional coating for increasing wear resistance.

2. Single-lip drill according to claim 1, **characterized in that** the rake angle (γ) is in a range between 15° and 25°.

3. Single-lip drill according to claim 1 or 2, **characterized in that** the chip break section (27) is positioned at a distance from the cutting edge (19) suitable for setting a desired chip size.

4. Single-lip drill according to claim 3, **characterized in that** the distance is in a range between 0.2 and 1.5 mm, particularly between 0.3 and 0.6 mm.

5. Single-lip drill according to one of the preceding claims, **characterized in that** the chip former (21) is constructed as a slot adjacent to the cutting edge (19) with a substantially U-shaped cross-section.

6. Single-lip drill according to one of the preceding claims, **characterized in that** the functional coating (29) is at least partly made from hard material, particularly metallic hard material.

7. Single-lip drill according to claim 6, **characterized in that** a nitride or a carbide, particularly a light metal nitride, is provided as the metallic hard material.

8. Single-lip drill according to claim 7, **characterized in that** titanium aluminium nitride is provided as the light metal nitride.

9. Single-lip drill according to one of the preceding claims, **characterized in that** the functional coating (29) has several layers (29a, 29b).

10. Single-lip drill according to claim 9, **characterized in that** at least one hard material layer (29a) and at least one soft material layer (29b) adjacent to the hard material layer is provided, the hard material layer (29a) forming an outer layer.

11. Method for the manufacture of a single-lip drill according to one of the preceding claims, **characterized by** the following steps:
- manufacturing a drill head (11) with a single-lip drill geometry, wherein the drill head (11) has a cooling lubricant supply channel (13) located in the interior of the drill head, an exterior corrugation (14) for removing the cooling lubricant-chip mixture and a bit (12) formed on the drill head (11), which bit is grinded in the drill head and has at least one cutting edge (19) for the machining by cutting of a workpiece, wherein the bit (12) is located in the front, end-side region of the drill head and the cutting edge (19) of the bit (12) extends at an angle to the drill axis (23);
- attaching a chip former (21) in the vicinity of the bit (12) of the single-lip drill, wherein the chip former (21) is assigned to the cutting edge (19), and has a positive rake angle (γ) on the cutting edge (19) in the range between 10° and 30°, wherein the chip former (21) is constructed as a slot adjacent to the cutting edge (19), which has a chip guide face (26) adjacent to the cutting edge (19) for chip-guiding the chips (22) and an arcuately curved chip break section (27) for breaking the chips (22), wherein the chip break section (27) directly adjoins the chip guide face (26) and extends up to a boundary surface (17) of the corrugation (14),
- after attachment of the chip former, coating at least part of the surface of the drill head (11) with a functional coating, wherein the chip former and all other functional surfaces participating in the cutting process are coated with a functional coating.

12. Method according to claim 12, **characterized in that** the functional coating is applied following a resharpening, particularly a regrinding, of the drill head.

13. Method according to one of claims 11 to 12, **characterized in that** the chip former is constructed as a slot adjacent to the cutting edge (19) of the bit (12) with a U-shaped cross-section.

## Revendications

1. Foret à une lèvre avec une tête de perçage (11) qui comporte un canal d'alimentation de lubrifiant réfrigérant (13) situé au sein de la tête de perçage, une ondulation (14) extérieure pour l'évacuation du mélange de lubrifiant réfrigérant- copeaux ainsi qu'un tranchant (12) réalisé sur la tête de perçage (11), le tranchant (12) étant meulé dans la tête de perçage et possédant au moins une arête de coupe (19) pour l'usinage par enlèvement de copeaux d'une pièce et au moins un brise-copeaux (21) étant affecté à l'arête de coupe (19) pour briser les copeaux enlevés par l'arête de coupe (19), dans lequel le tranchant (12) se trouve dans la zone avant, frontale de la tête de perçage, dans lequel l'arête de coupe (19) du tranchant (12) s'étend à un certain angle par rapport à l'axe du foret (23), **caractérisé en ce que** le brise-copeaux (21) affecté à ce tranchant (12) présente un angle de coupe (γ) positif sur l'arête de coupe (19) dans une plage de 10° à 30°, dans lequel le brise-copeaux (21) est réalisé comme une rainure adjacente à l'arête de coupe (19), qui comporte une surface de guidage des copeaux (26) pour guider les copeaux (22) adjacente à l'arête de coupe (19) et une section brise-copeaux (27) courbée en arc destinée à briser les copeaux (22), dans lequel la section brise-copeaux (27) se raccorde directement à la surface de guidage des copeaux (26) et s'étend jusqu'à une surface de délimitation (17) de l'ondulation (14), dans lequel le brise-copeaux et toutes autres surfaces fonctionnelles participant au processus de coupe sont revêtues d'un revêtement fonctionnel pour augmenter la résistance à l'usure.

2. Foret à une lèvre selon la revendication 1 **caractérisé en ce que** l'angle de coupe (γ) se situe dans une plage de 15° à 25°.

3. Foret à une lèvre selon la revendication 1 ou 2 **caractérisé en ce que** la section brise-copeaux (27) est disposée à une distance de l'arête de coupe (19) appropriée au réglage d'une taille de copeau souhaitée.

4. Foret à une lèvre selon la revendication 3 **caractérisé en ce que** la distance se situe dans la plage de 0,2 mm à 1,5 mm, en particulier dans la plage de 0,3 mm à 0,6 mm.

5. Foret à une lèvre selon l'une quelconque des revendications précédentes **caractérisé en ce que** le brise-copeaux (21) est réalisé comme une rainure adjacente à l'arête de coupe (19) avec une section transversale pour l'essentiel en forme de U.

6. Foret à une lèvre selon l'une quelconque des revendications précédentes **caractérisé en ce que** le revêtement fonctionnel (29) est composé au moins en partie de matériau dur, en particulier d'un matériau dur métallique.

7. Foret à une lèvre selon la revendication 6 **caractérisé en ce qu'**un nitrure ou un carbure, en particulier un nitrure de métal léger, est prévu comme matériau dur métallique.

8. Foret à une lèvre selon la revendication 7 **caractérisé en ce que** le nitrure d'aluminium au titane est prévu comme nitrure de métal léger.

9. Foret à une lèvre selon l'une quelconque des revendications précédentes **caractérisé en ce que** le revêtement fonctionnel (29) comporte plusieurs couches (29a, 29b).

10. Foret à une lèvre selon la revendication 9 **caractérisé en ce qu'**au moins une couche de matériau dur (29a) et au moins une couche de matériau tendre (29b) adjacente à la couche de matériau dur sont prévues, la couche de matériau dur (29a) formant une couche extérieure.

11. Procédé de production d'un foret à une lèvre selon l'une quelconque des revendications précédentes **caractérisé par** les étapes suivantes :
- production d'une tête de perçage (11) avec une géométrie de foret du foret à une lèvre, la tête de perçage (11) comportant un canal d'alimentation de lubrifiant réfrigérant (13) situé au sein de la tête de perçage, une ondulation (14) extérieure pour l'évacuation du mélange de lubrifiant réfrigérant-copeaux ainsi qu'un tranchant (12) réalisé sur la tête de perçage (11)), le tranchant (12) est meulé dans la tête de perçage et présente au moins une arête de coupe (19) pour l'usinage par enlèvement de copeaux d'une pièce, dans lequel le tranchant (12) se trouve dans la zone avant, frontale de la tête de perçage et l'arête de coupe (19) du tranchant (12) s'étend à un certain angle par rapport à l'axe du foret (23) ;
- aménagement d'un brise-copeaux (21) dans la zone du tranchant (12) du foret à une lèvre, le brise-copeaux (21) étant affecté à l'arête de coupe (19), et présente un angle de coupe (γ) positif sur l'arête de coupe (19) dans une plage de 10° à 30°, dans lequel le brise-copeaux (21) est réalisé comme une rainure adjacente à l'arête de coupe (19), qui comporte une surface de guidage des copeaux (26) pour guider les copeaux (22) adjacente à l'arête de coupe (19) et une section brise-copeaux (27) courbée en arc destinée à briser les copeaux (22), dans lequel la section brise-copeaux (27) se raccorde directement à la surface de guidage des copeaux (26) et s'étend jusqu'à une surface de délimitation (17) de l'ondulation (14),
- revêtement de la tête de perçage (11) après l'aménagement du brise-copeaux sur au moins une partie de sa surface avec un revêtement fonctionnel, dans lequel le brise-copeaux et toutes autres surfaces fonctionnelles participant au processus de coupe sont revêtues d'un revêtement fonctionnel.

12. Procédé selon la revendication 11 **caractérisé en ce que** le revêtement fonctionnel est appliqué après un réaiguisage, en particulier un réaffûtage, de la tête de perçage.

13. Procédé selon l'une quelconque des revendications 11 à 12 **caractérisé en ce que** le brise-copeaux est réalisé comme une rainure adjacente à l'arête de coupe (19) du tranchant (12) avec une section transversale en forme de U.
